# EUROPÄISCHE PATENTSCHRIFT

(11) **EP 2 146 325 B1**
(45) Veröffentlichungstag und Bekanntmachung des Hinweises auf die Patenterteilung: **06.03.2013**
(21) Anmeldenummer: 08160555.2
(22) Anmeldetag: 16.07.2008
(51) Int. Cl.: G07C 5/08, B60Q 1/52, B60R 1/00

(54) **Aufzeichnungsgerät für die Aufnahme, Bearbeitung und Speicherung von Bilddaten in einem Fahrzeug sowie Verfahren**
Recording device for receiving, processing and storing image files in a vehicle and method
Appareil de dessin pour la réception, le traitement et le stockage de données d'image dans un véhicule et procédé

(43) Veröffentlichungstag der Anmeldung: 20.01.2010
(73) Patentinhaber: SMR Patents S.à.r.l., 1653 Luxembourg (LU)
(72) Erfinder: Eder, Oliver, 75446, Pinache (DE); Schäffer, Heinz-Erwin, 70806, Kornwestheim (DE)
(74) Vertreter: Weber-Bruls, Dorothée

(56) Entgegenhaltungen:
- WO-A-2007/042798
- DE-A1- 4 221 280
- DE-A1-102006 007 343
- DE-A1-102007 055 404

## Beschreibung

Es wird ein Aufzeichnungsgerät für die Aufnahme, Bearbeitung und Speicherung von Bilddaten in einem Fahrzeug vorgeschlagen, das in der Lage ist, die Daten eines optischen bildgebenden Sensors und die im Fahrzeug vorhandenen Daten zu kombinieren und zu speichern. Eine solche "Blackbox" ermöglicht die Rekonstruktion von Unfallgeschehen.

Weiterhin wird ein Verfahren zur Aufzeichnung von Bild-und Fahrzeugdaten beschrieben, das auf einfache Art die Daten eines optischen bildgebenden Sensors und weitere Fahrzeugdaten in einem Datenstrom abbildet.

### Stand der Technik

Unfallspeicher oder auch Blackboxes zeichnen verschiedene Daten direkt vor einem Unfall auf und speichern diese dauerhaft ab. Die Informationen, wie zum Beispiel Kamerabilder vorne/hinten, Blinker, Geschwindigkeit, fahrdynamische Kenndaten oder GPS-Position, lassen sich dann auswerten, um den Unfallhergang zu analysieren und zu rekonstruieren. Davon profitieren nicht nur Polizei, Gerichte und

Versicherungen, sondern durch Schulungen lassen sich die Zahl der Unfälle sowie der Benzinverbrauch verringern. Ausserdem können Fahrzeughersteller zukünftige Sicherheitssysteme aufgrund realer Unfalldaten und Unfallprofile entwickeln. Gerade die schnelle Aufklärung ist für gewerbliche Fahrzeugflotten besonders vorteilhaft, da sich Zeitverlust und Kosten durch einen Unfall reduzieren lassen. Langwierige gerichtliche Auseinandersetzungen können vermieden und Entscheidungen aufgrund von objektiven Daten getroffen werden.

Die Anwesenheit eines solchen Geräts führt nachweislich bereits zu einer defensiveren Fahrweise. Noch wichtiger ist das Auswerten von Unfällen, um einen Lerneffekt zu erreichen. Einige Taxiunternehmen setzen Drive-Recorder jedoch bereits zu dem Zweck ein, das Fahrverhalten der Mitarbeiter und den daraus resultierenden Benzinverbrauch zu verbessern. Auch Firmen nutzen solche Veranstaltungen, um den Benzinverbrauch für ihr Unternehmen zu reduzieren und Kosten sowie Ressourcen zu sparen. Mit Datenspeichern ist dies noch einfacher und effektiver realisierbar: Jeder Mitarbeiter kann sein ganz persönliches Beschleunigungs- und Bremsprofil selbst auswerten und auch anhand von Videoaufzeichnungen Situationen im Nachhinein bewerten.

Studien belegen, dass sich die Kosten zur Unfallaufklärung pro Fahrzeug pro Jahr mit einem Unfallschreiber um etwa 500 Euro reduzierten. Die Benzineinsparung pro Jahr wird auf durchschnittlich 10% bei Fahrzeugen mit einem solchen System geschätzt. Dies zeigt, dass sich die Investition in einen Unfalldatenspeicher bereits nach kurzer Zeit rechnet.

Weitere Vorteile sind durch die Zusammenarbeit mit Versicherungen denkbar. Kfz-Versicherer interessieren sich bereits seit Längerem für derartige Systeme, um ihre

Kosten zu senken. Jedes Fahrzeug mit Unfallschreiber bedeutet weniger Unfälle und schnellere Schadensregulierung, was sich für Versicherer durch niedrigere Personal- und Gerichtskosten auszahlt. Diese Einsparungen können dazu genutzt werden, um Endgeräte zu subventionieren, oder Fahrer, die freiwillig einen Drive-Recorder verwenden, durch geringere Beiträge zu belohnen.

Automobilhersteller können ihre Sicherheitskonzepte aufgrund von realen Daten entwickeln. Nicht nur Unfalldaten sind hier nützlich. Beinahezusammenstösse helfen bei der Entwicklung von präventiven Sicherheitskonzepten. Ein Hersteller mit grosser Datenbasis kann seine neuen Systeme durch Simulationen, die auf realen Ereignissen basieren, schneller qualifizieren und auf den Markt bringen.

Unfallschreiber sind im Stand der Technik bekannt. So beschreibt die DE 197 10 393 A1 ein Verfahren und ein Gerät, das Daten aus dem Fahrzeug aufzeichnen kann. In dieser Veröffentlichung werden Bilddaten und weitere Fahrzeugdaten erwähnt, die in einem Datenspeicher zusammen abgelegt werden.

Ein gattungsgemäßes Aufzeichnungsgerät ist bekannt aus DE 42 21 280 A1. Die DE 10 2004 004 669 A1 beschreibt ebenfalls einen Unfallschreiber, der zu einer umfangreichen Speicherung von unterschiedlichsten Videodaten eingesetzt wird. Diese Lösungen speichern neben den Bilddaten noch weitere fahrzeugrelevante Daten. Was nicht erwähnt wird, ist, wie die Daten gespeichert werden und wie die fahrzeugrelevanten Daten zu den Bilddaten in Bezug gesetzt werden. Für verschiedene Anwendungen ist aber gerade die Korrelation der Daten von Bedeutung. Sollen die Daten für einen Test ausgelesen werden, ist es durchaus relevant, dass zum Beispiel die Fahrzeugdaten zur Geschwindigkeit genau zu dem zeitlich korrelierenden Bild zur Verfügung gestellt werden.

Auch im Falle eines Unfalls ist es von Bedeutung, die Korrelation der Daten fälschungssicher auslesen zu können.

Es ist die Aufgabe der vorliegenden Erfindung, diese Korrelation der Daten sicher zu stellen.

Die Aufgabe wird mit den Merkmalen der unabhängigen Ansprüche gelöst. Das erfindungsgemässe Aufzeichnungsgerät für die Aufnahme und Bearbeitung von Bilddaten in einem Fahrzeug weist einen optischen, bildgebenden Sensor und einen Signalprozessor zur Verarbeitung der Bilddaten, mit einem Kommunikationsprozessor zur bidirektionalen Kommunikation mit dem Fahrzeug auf, wobei die Bilddaten und weitere Fahrzeugdaten in die Datenstruktur eines Fahrzeugbussystems zusammen in einem gemischten Datenformat abgebildet werden.

Weitere Vorteile sind aus den abhängigen Ansprüchen zu entnehmen.

Die Daten von Bild und Fahrzeug werden für das im CAN- Bus nötige Byte orientierte Format abgebildet. Durch die Vermischung von Bild- und Fahrzeugdaten per Byte wird die zeitliche Korrelation in einer physikalischen Korrelation der Daten erreicht. Die Aufzeichnung erfolgt in einem Speichermedium, das geeignet ausgewählt wird.

Vorteilhafterweise werden die Bilddaten in ihrer Menge reduziert. Da die Gesamtbilddaten eine sehr grosse Datenmenge aufweisen ist es ein Vorteil, die Bildauswertung vor der weiteren Verarbeitung vorzunehmen und so die

Bilddatenmenge zu reduzieren. Dadurch werden beispielsweise nur die veränderlichen Anteile des Bildes gespeichert.

Vorteilhafterweise wird ein vorhandenes Totwinkel-Überwachungssystem zur Aufzeichnung verwendet. Dadurch ist kein separates Gerät als Unfallschreiber notwendig. Das Totwinkel-Überwachungssystem ist räumlich nahe an einem Aussenspiegel des Fahrzeugs angebracht. Das Gerät ermittelt Bilddaten zur Anzeige einer Näherung eines Fahrzeugs im toten Winkel des Spiegels. Durch die Integration des erfindungsgemässen Verfahrens erlaubt das Totwinkel-Überwachungssystem zusätzlich die Auswertung von Fahrzeugdaten und deren Korrelation zu den Bilddaten.

### Figuren

Figur 1 a und 1b zeigen beispielhaft die Einbaulage des Unfallschreibers;
Figur 2 zeigt schematisch den Aufbau des Unfallschreibers;
Figur 3 zeigt den Ablauf des Verfahrens;
Fig. 4 zeigt einen CAN Datenrahmen;
Fig. 5 zeigt ein Beispiel für das Abbilden der Daten im Datenrahmen
Fig. 6 zeigt eine Ausführungsform gemäß Figur 2.

### Beschreibung der Erfindung

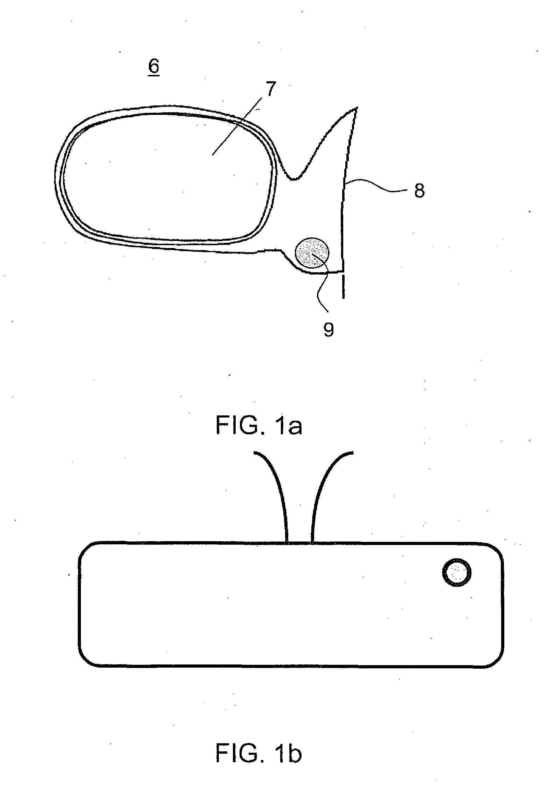

Figur 1a zeigt einen beispielhaften Fahrzeugaussenspiegel 6. Die Rückspiegelanordnung besteht aus einem Spiegelkopf und einem Spiegelfuss. Der Spiegel selbst ist im Spiegelkopf angeordnet. Der Spiegelfuss ist bündig mit der Fahrzeugkontur 8 verbunden. Ein optischer Sensor 9 ist an der

Rückspiegelanordnung angebracht; in dieser Ausführungsform im oder am Spiegelfuss. Als optischer Sensor 9 dient jede Art von Sensor, der zur Bilderfassung dienen kann. In dieser Ausführungsform ist eine weitere Funktion des Aufzeichnungsgerätes die Analyse von Gefahren, die im toten Winkel des Spiegels auftauchen. Weitere Positionen am Aussenspiegel sowie an der Aussenkontur des Fahrzeugs sind für den Sensor möglich.

Fig. 1b zeigt schematisch einen Fahrzeuginnenspiegel mit einem optischen Sensor 9. Der Innenspiegelsensor dient zur Aufzeichnung von Innenraumbildern, wie sie für Sitzbelegungserkennung, Fahrererkennung sowie Aufmerksamkeitsassistenten verwendet werden. Auch hier liegen Bilddaten vor, die man geeignet weiterverwenden kann.

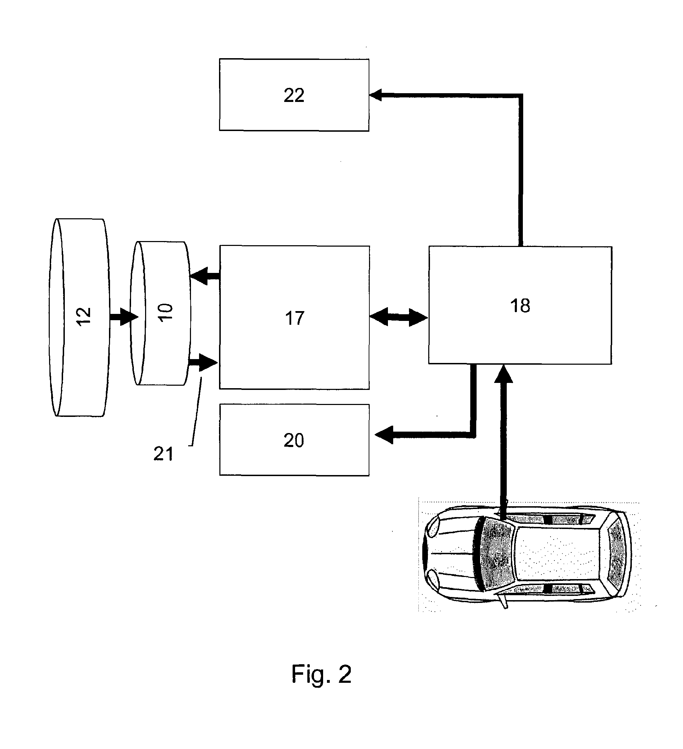

Figur 2 zeigt schematisch den Aufbau des optischen Sensorsystems. Eine optische Linse 12 ist einem Sensorchip 10 vorgeschaltet. Dieser optische Chip ist mit einer Bilddatenverbindung 21 mit einem Bildprozessor 17 verbunden. Dieser steht bidirektional mit einem Kommunikationskontroller 18 in Verbindung. Dieser Kommunikationscontroller 18 stellt über den Fahrzeugbus, zum Beispiel einem LIN Bus oder CAN-Bus die Verbindung zu weiteren Kontrollern im Fahrzeug her. Über den Kommunikationscontroller 18 wird die Ausgabeeinheit 20 angesprochen, entweder direkt wie im Beispiel ausgeführt oder über das Fahrzeugbussystem. Der Bildprozessor 17 wiederum greift über die Sensorkontroll-Verbindung auf den Sensorchip 10 zu. Die Ausgabeeinheit 20 kann eine einfache Leuchtdiode sein, die zur Totwinkelüberwachung dient oder ein Warnhinweis in einem Display, ein Warnton oder eine haptische Warnung. Der Kommunikationscontroller 18 ist weiterhin mit einem Speicher 22 verbunden, in dem die Bild - und Fahrzeugdaten gespeichert werden.

Dieser Aufbau ist eine beispielhafte Lösung. Die Funktionen des Signalprozessors und des Kommunikationscontrollers 18 können in einer anderen Ausführungsform auch in einem Gerät kombiniert vorliegen. Auch der Speicher 22 muss nicht zwingend als Einzelkomponente vorliegen. Eine Integration in einen Chip ist durchaus wünschenswert. Der gesamte Aufbau der Auswerteeinheit findet beispielsweise in einem Aussenspiegel Platz. Die Auswerteinheit dient dabei in einer Funktion zur Erfassung von Bilddaten für die Gefahrenanzeige, sollte sich ein Fahrzug im toten Winkel nähern. Dabei werden Bilddaten in diesem Beispiel mit einer zeitlichen Auflösung von 30 Frames/s aufgenommen. Die Bilddaten werden analysiert und durch Bilderkennungsalgorithmen Gegenstände, wie Fahrzeuge also PKW, LKW, Motorräder sowie in einer weiteren Entwicklung Gebäude, Bäume, Menschen, erkannt. Durch Auswertung von aufeinander folgenden Bildern wird die Geschwindigkeit bestimmt, die als ein Kriterium für den Warnhinweis ausgewertet wird. Auf diese Weise wird ein sich näherndes Fahrzeug erkannt und dem Fahrer ein Warnhinweis gegeben.

Gerade diese Informationen über erkannte Bildgegenstände und deren Relativgeschwindigkeit sind bei der Aufzeichnung eines Unfallsgeschehens von Bedeutung.

Wenn sich der Sensor im Innenspiegel befindet kann ein Aufmerksamkeitsassistent realisiert werden. Der bildgebende Sensor überwacht das Gesicht des Fahrers. Ein im Bildprozessor ablaufender Algorithmus wertet Schlüsselinformationen der Mimik und beispielsweise die Lidbewegungen aus. Daraus wird, sollte der Fahrer einschlafen, eine Warnung generiert.

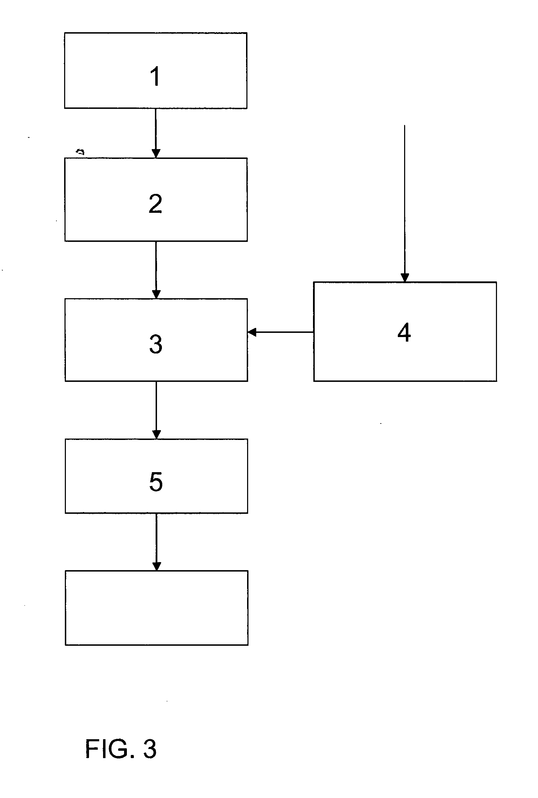

Figur 3 zeigt den Ablauf des Verfahrens zur Auswertung von Fahrzeug- und Bilddaten. Schritt 1 stellt die Bilderfassung mit einem optischen Sensor 9 dar. Die Daten des Sensorchips 10 werden in Schritt 2 von einem Signalprozessor nach vorgegebenen Algorithmen verarbeitet. In Schritt 3 werden die Bilddaten in das Datenformat des Fahrzeugbus also beispielsweise des CAN Bus abgebildet. Über den Schritt 4 kommen über das Fahrzeugbussystem die weiteren Fahrzeugdaten, die zusammen in das Datenformat des entsprechenden Bussystems einfliessen. In Schritt 5 werden die Daten im gemischten Format gespeichert und der Prozess läuft wieder von vorne ab.

Optische Sensoren 9, wie sie in der Erfindung Anwendung finden, sind bei unterschiedlichen Herstellern zu finden. Diese Bildsensoren weisen zum Beipsiel eine Auflösung von 2<0> bis 2<12> Bit pro Bildpunkt auf. Bei einem normalen VGA Format mit 640 x 480 Pixeln oder gar einem WVGA Format mit 840x 480 Pixeln entstehen gewaltige Datenmengen. Die Daten stehen in einem 11 oder 12 Bit Format zur Verfügung,

Um die Vorwarnzeiten für die Erfassung von Gefahren im toten Winkels zu erreichen, arbeitet das Bilderfassungssystem mit 30 Bildern pro Sekunde. Diese Datenmengen sind nicht einfach zu übertragen und auch nicht einfach zu speichern.

Für die Übertragung von Bilddaten ist die Struktur des CAN-Bus nicht sehr geeignet. Es wird zwischen einem Highspeed- und einem Lowspeed-Bus unterschieden. Bei einem Highspeed-Bus beträgt die maximal mögliche Datenübertragungsrate 1 Mbit/s, ein Wert, der zur Übertragung eines Bilddatenstroms nicht ausreicht und im Fahrzeug auch nicht erreicht wird. Zudem wird im CAN Bus der Buszugriff verlustfrei mittels der bitweisen Arbitrierung auf Basis der Identifier der zu sendenden

Nachrichten aufgelöst. Dazu überwacht jeder Sender den Bus, während er gerade den "Identifier" sendet. Senden zwei Teilnehmer gleichzeitig, so überschreibt das erste dominante Bit eines der beiden das entsprechend rezessive des anderen, welcher dieses erkennt und seinen Übertragungsversuch beendet, damit der Andere seine Daten übertragen kann. Durch dieses Verfahren ist auch eine Hierarchie der Nachrichten untereinander gegeben. Die Nachricht mit dem niedrigsten Identifier darf "immer" übertragen werden. Für die Übertragung von zeitkritischen Nachrichten kann also ein Identifier hoher Priorität vergeben werden, um ihnen so Vorrang bei der Übertragung zu gewähren. Dennoch kann selbst bei Botschaften mit hoher Priorität der Sendezeitpunkt zeitlich nicht genau vorher bestimmt werden, da gerade in Übertragung befindliche Nachrichten nicht unterbrochen werden können und den Startzeitpunkt einer Sendung so bis zur maximalen Nachrichtenlänge verzögern können. Lediglich die maximale Sendeverzögerung für die Nachricht mit höchster Priorität kann bei bekannter maximaler Nachrichtenlänge errechnet werden. Der CAN-Bus ist kein deterministischer Bus. In einem solchen Bussystem ist die Übertragung von Bilddatenströmen die die gesamte Bandbreite beanspruchen würden nicht gewährleistet und auch nicht wünschenswert.

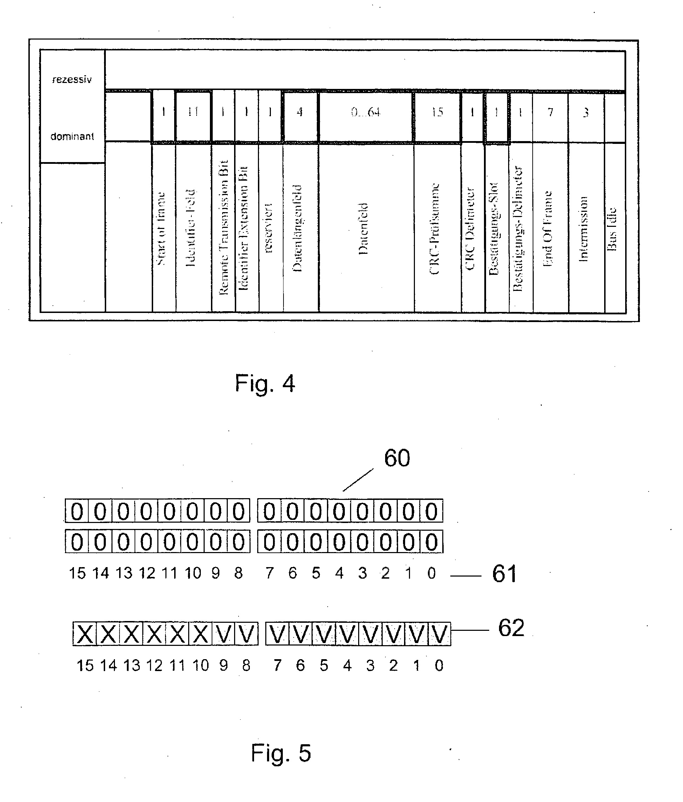

Figur 4 zeigt die Datenstruktur des CAN Datentelegramms.

Ein Daten-Frame ist logisch wie folgt aufgebaut:
Start of Frame (SOF) = ein dominantes Bit
Arbitrierungsfeld bestehend aus einem Identifier-Segment (11 Bit oder 29+2 Bit) plus einem RTR-Bit (Remote Transmission Request)
Kontrollfeld (CTRL) = 6 Bit
Datenfeld (DATA) = 0-64 Bit (in Einheiten von 8 Bit)
Prüfsummenfeld (CRC) = 16 Bit (15 Bit CRC plus einem rezessiven CRC-Delimiter-Bit)
Bestätigungsfeld (ACK) 2 Bit, bestehend aus einem ACK-Slot plus einem rezessiven ACK-Delimiter
End of Frame (EOF) 7 Bit (rezessiv)
Intermission (IFS - Intermission Frame Space) = 3 Bit (= min. Anzahl der Bits, die aufeinanderfolgende Botschaften trennt)

Die Bilddaten werden im Bildprozessor 17 aufbereitet um der Struktur des Datentelegramms zu folgen. Die Bilddaten werden im Datenfeld in Einheiten von 8 Bit abgelegt. Zur Datenreduktion dienen dabei Softwarefilter, die Signalrauschen unterdrücken. In einer verbesserten Ausführungsform werden die Daten durch Auswertealgorithmen auf die Daten der erkannten Objekte und der Bildveränderung der erkannten Objekte reduziert. Zwei Datenbyte zusammen bilden ein Datenwort mit insgesamt 16 Bit Nutzdaten.

Figur 5 zeigt die Datenstruktur auf. Das Datenwort 60 enthält 16 Bit . Die Schreibrichtung 61 ist dabei vom Ende aufsteigend. Die Bilddaten 62 sind mit V gekennzeichnet. 10 Bit Bilddaten werden in das Datenwort geschrieben. Die verbleibenden 6 Bit werden mit den Fahrzeugdaten, mit X gekennzeichnet, beschrieben. Als Fahrzeugdaten werden hier beispielhaft die Sensordaten von GPS-Empfänger, Geschwindigkeit, Lenkwinkel, Beschleunigung, Regensensor , ESP, ABS, elektronisches Gaspedal sowie weiteren Bildsensoren erwähnt. Da die Bilddaten zur Übermittlung und/oder zur Speicherung in der Grössenordnung von bis zu 10<9> Datenworten/s vorliegen, stehen ausreichende ungenutzte Bit für die Speicherung aller anderen Fahrzeugdaten zur Verfügung. Die in die Datenworte der

Bilddaten abgebildeten Sensordaten sind mit den Bilddaten zum Aufnahmezeitpunkt verbunden. Nur über eine spezielle Auslesesoftware ist die Auflösung der verschränkten Daten Bit für Bit möglich. Dadurch erhöhen sich die Sicherheit der Datenspeicherung und auch die Fälschungssicherheit.

Die in Figur 5 dargestellte Ausführungsform stellt nur ein Beispiel der Verteilung der Daten dar. Die Aufteilung der Bits zwischen Videodaten und weiteren Fahrzeugdaten hängt vom gewählten Videosensor ab. Ausser der beschriebenen Aufteilung 12/4 sind auch andere Verhältnisse 10/6 und weitere denkbar und für die Erfindung möglich.

Bevor die Fahrzeugdaten in die Datenworte geschrieben werden muss sichergestellt sein, dass die Bits auf 0 gesetzt sind. So wird verhindert, dass die Fahrzeugdaten durch alte Datenwerte in den Datenworten verfälscht werden.

Möchte man mit diesen Datenmengen einen Unfallschreiber darstellen, stellt die Wahl des Speichermediums einen kritischen Punkt dar. Die Daten über den Bus auf ein Speichermedium zu übertragen ist aus den oben genannten Gründen nicht optimal. Daher ist ein Speichermedium, das sich in räumlicher Nähe zu den Prozessoren befindet oder integriert ist, vorzuziehen. Aber auch die Speicherung ist nicht einfach. Die Speicherung der Daten muss über einen Betriebszeitraum von 10 Jahren gewährleistet sein, wobei Temperaturen von -40°C bis +90°C zu spezifizieren sind. Geht man von einer Lebensdauer von 10 Jahren aus und von einer Bildspeicherfrequenz von einem Bild pro Sekunde liegt man bei 3 x 10<8> Speichervorgängen von jeweils etwa 1 MByte Daten. Kommerzielle Flash Speicher, die sich als Medium anbieten, da sie keine Stromversorgung benötigen, sind im Einzelfall bis 1 Mio. Schreibvorgänge bekannt. Da die Flash Speicher durch ihr physikalisches Prinzip altern und Zellen ausfallen, ist die wiederholte

Beschreibbarkeit der Speicherzellen limitiert. Flash Speicher werden mit einer gewissen Redundanz hergestellt und einer Software geliefert, die die ausfallenden Zellen maskiert. Der Einsatz von Flash-Speichern ist für das Aufzeichnungsgerät möglich.

Die Erfindung ist aber auch mit jedem anderen Speichermedium möglich, das durch technische Entwicklung dem Fachmann zur Verfügung gestellt wird.

Für eine sinnvolle Verwendung als Unfallschreiber wird das Aufzeichnungsgerät auf die Speicherung von um die 10 Bilder ausgelegt. Diese Bilder werden aus dem Datenstrom jede Sekunde entnommen. Das älteste abgelegte Bild wird dabei jeweils mit dem neuesten überschrieben.

Im Falle einer Innenraumüberwachung läuft die Speicherung der Bild- und Fahrzugdaten analog ab. Auch hier bietet der Speicher die Daten als gemischte Daten an. Die Speicherung und das Auslesen erfolgt analog.

Das Integrieren von Bild- und Fahrzeugdaten bleibt in der Anwendung nicht nur auf eine potentielle Speicherung beschränkt.

Eine weitere Anwendung besteht im Einsatz im europäischen eCall System, indem nach dem Willen der Europäischen Kommission eine automatische. Unfallinformation gesendet werden soll, um die Rettungskräfte schnell an den Unfallort zu führen.

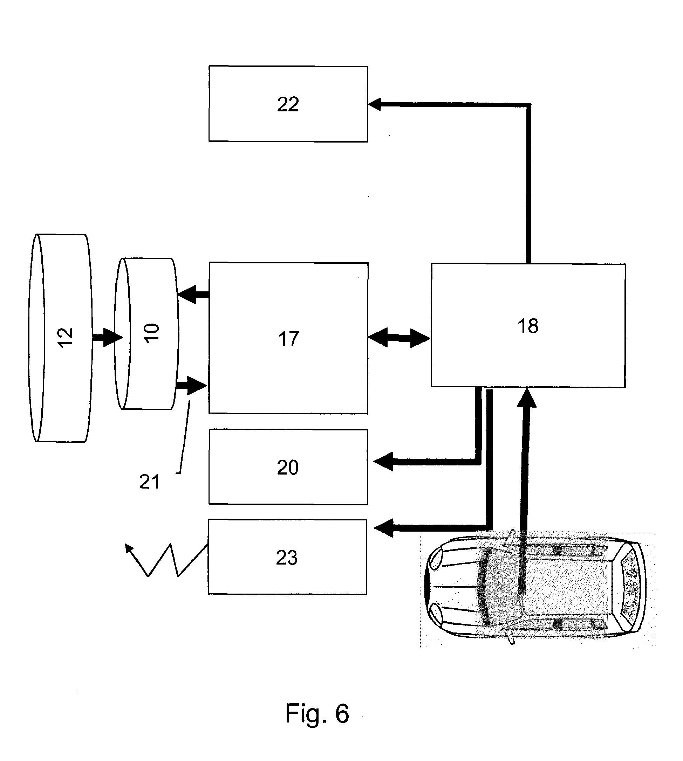

Figur 6 stellt eine Ausführungsform in Ergänzung zu Figur 2 dar. Für diese Anwendung wird das Fahrzeug an ein Rettungsfunknetz angebunden. Es kann dabei die existierenden UMTS und GSM Netze verwenden. Die Informationen über den Unfall werden von einem Crashsensor ausgelöst und das Aussenden der Daten

über einen Sender 23 gestartet. Bei der Aussendung sind zu den Bilddaten vor allen die GPS Daten von Bedeutung. Das erfindungsgemässe Verfahren der Datenvermischung in den Datenworten des CAN Bus löst ein Problem, das aktuell diskutiert wird. Die Automobilhersteller haben Bedenken, die Daten des CAN Bus, die für das Fahrzeug sicherheitsrelevant sind, unverschlüsselt über das öffentlich zugängliche Funknetz zu übertragen. Mit der Vermischung der Daten ist eine Verschlüsselung erfolgt. Nur mit einer geeigneten Software lässt sich die Information aus dem Datenstrom wiedergewinnen.

Zum Aufbau eines solchen eCall-Systems ist es notwendig das Aufzeichnungsgerät mit seinem Speicher im Falle eines Unfalls über die Luftschnittstelle mit der Rettungsleitstelle zu verbinden.

Zur Umsetzung sind mehrere Möglichkeiten für den Fachmann denkbar, die Verwendung eines mobilen Telefons über Steckverbindung oder Funkschnittstelle, das Ansprechen eines GSM/UMTS Moduls über das Fahrzeugbussystem oder die Integration eines Funkmoduls im Aufzeichnungsgerät selbst, das nur durch den Crash-Sensor aktiviert den Inhalt des Speichers sendet.

## Patentansprüche

1. Aufzeichnungsgerät für die Aufnahme, Bearbeitung und Speicherung von Bilddaten, wobei das Aufzeichnungsgerät in einem Fahrzeug anordbar ist, mit einem optischen, bildgebenden Sensor (9) und einem Bildprozessor (17) zur Verarbeitung der Bilddaten, mit einem Kommunikationscontroller (18) zur bidirektionalen Kommunikation mit dem Fahrzeug, **dadurch gekennzeichnet, dass**
das Aufzeichnungsgerät derart ausgebildet ist, um die Bilddaten und weitere Fahrzeugdaten in die Datenstruktur eines Fahrzeugbussystems zusammen als gemischte Daten abzubilden.

2. Aufzeichnungsgerät nach Anspruch 1, **dadurch gekennzeichnet, dass** das Fahrzeugbussystem ein CAN Bus ist und das Aufzeichnungsgerät derart ausgebildet ist, um die Daten per Byte in die Datenstruktur abzubilden.

3. Aufzeichnungsgerät nach Anspruch 1, **dadurch gekennzeichnet, dass** das Aufzeichnungsgerät einen Speicher (22) enthält, der mit dem optischen Sensor (9) verbunden ist.

4. Aufzeichnungsgerät nach Anspruch 1 **dadurch gekennzeichnet, dass** der Bildprozessor (17) die Bilddaten auswertet und derart ausgebildet ist, um einen datenreduzierten Bilddatensatz, bei dem die Daten eines Bildes durch Auswertung der Bilddaten reduziert sind, in einem Speicher (22) abzuspeichern.

5. Aufzeichnungsgerät nach Anspruch 1, **dadurch gekennzeichnet, dass** das Aufzeichnungsgerät am Fahrzeug am Außenspiegel (6) angebracht ist.

6. Aufzeichnungsgerät nach Anspruch 5, **dadurch gekennzeichnet, dass** das Aufzeichnungsgerät als eine Totwinkelüberwachungseinrichtung ausgebildet ist.

7. Aufzeichnungsgerät nach Anspruch 1, **dadurch gekennzeichnet, dass** das Aufzeichnungsgerät im Fahrzeug im Innenspiegel angebracht ist.

8. Verfahren zur Aufzeichnung von Bild- und Fahrzeugdaten mit einem optischen, bildgebenden Sensor (9) und einem Signalprozessor zur Verarbeitung der Bilddaten, mit einem Kommunikationscontroller (18) zur bidirektionalen Kommunikation mit dem Fahrzeug, von dem die Bild- und Fahrzeugdaten stammen, wobei folgende Schritte ausgeführt werden
- Aufnehmen des Bildes mit dem optischen Sensor
- Auswerten des Bildes mit dem Signalprozessor
- Empfangen von weiteren fahrzeugrelevanten Daten
- Mischen der von dem optischen Sensor aufgenommenen und/oder von dem Signalprozessor ausgewerteten Bilddaten und der fahrzeugrelevanten Daten in einem Datenstrom in einem Fahrzeugbus angepassten Datenrahmen und
- Speicherung der angepassten Datenrahmen in einem Speicher (22).

9. Verfahren nach Anspruch 8, wobei
die Datenrahmen eines Bildes in einer Folge von mindestens 1 Bild pro Sekunde gespeichert werden.

10. Verfahren nach Anspruch 8 oder 9, wobei
die Daten des Bildes durch Auswertung der Bilddaten reduziert und die reduzierten Daten des Bildes abgespeichert werden.

## Claims

1. A recording device for receiving, processing and storing image files, wherein the recording device can be arranged in a vehicle, with an optical imaging sensor (9) and an image processor (17) for processing the image files, with a communication controller (18) for bidirectional communication with the vehicle, **characterized in that** the recording device is designed to map the image files together with further vehicle data, in the form of mixed data, into the data structure of a vehicle bus system.

2. The recording device according to claim 1, **characterized in that** the vehicle bus system is a CAN bus and the recording device is designed to map the data per byte into the data structure.

3. The recording device according to claim 1, **characterized in that** the recording device contains a memory (22) that is connected to the optical sensor (9).

4. The recording device according to claim 1, **characterized in that** the image processor (17) analyzes the image files and is designed to store in a memory (22) a data-reduced image file record in which the data of an image are reduced by the analysis of the image files.

5. The recording device according to claim 1, **characterized in that** the recording device is mounted on the vehicle on the exterior mirror (6).

6. The recording device according to claim 5, **characterized in that** the recording device is designed as a blind-spot monitoring device.

7. The recording device according to claim 1, **characterized in that** the recording device is mounted in the vehicle in the interior mirror.

8. A method for recording image files and vehicle data by means of an optical imaging sensor (9) and a signal processor for processing the image files, by means of a communication controller (18) for bidirectional communication with the vehicle from which the image files and vehicle data come, wherein the following steps are executed:
- receiving the image by means of the optical sensor;
- analyzing the image by means of the signal processor;
- receiving further vehicle-relevant data;
- mixing the image files received by the optical sensor and/or analyzed by the signal processor with the vehicle-relevant data in a data stream in data frames that are adjusted to a vehicle bus, and;
- storing the adjusted data frames in a memory (22).

9. The method according to claim 8, wherein
the data frames of an image are stored in a sequence of at least 1 image per second.

10. The method according to claim 8 or 9, wherein
the data of the image are reduced by the analysis of the image files and the reduced data of the image are stored.

## Revendications

1. Dispositif d'enregistrement pour la capture, le traitement et la sauvegarde de données d'image, le dispositif d'enregistrement étant agencé dans un véhicule, ayant un capteur optique d'imagerie (9) et un processeur d'image (17) pour le traitement des données d'image, et ayant une commande de communication (18) pour une communication bidirectionnelle avec le véhicule, **caractérisé en ce que**
le dispositif d'enregistrement est formé de manière à représenter ensemble les données d'image et les données de véhicule consécutives dans la structure de données d'un système de bus de véhicule sous la forme de données mélangées.

2. Dispositif d'enregistrement selon la revendication 1, **caractérisé en ce que** le système de bus de véhicule est un bus de type CAN, et le dispositif d'enregistrement est formé de manière à représenter les données par octet dans la structure de données.

3. Dispositif d'enregistrement selon la revendication 1, **caractérisé en ce que** le dispositif d'enregistrement contient une mémoire (22), qui est reliée au capteur optique (9).

4. Dispositif d'enregistrement selon la revendication 1, **caractérisé en ce que** le processeur d'image (17) exploite les données d'image, et est formé de manière à sauvegarder un enregistrement d'image par compression de données, par l'intermédiaire duquel les données d'une image sont réduites par exploitation des données d'image, dans une mémoire (22).

5. Dispositif d'enregistrement selon la revendication 1, **caractérisé en ce que** le dispositif d'enregistrement est installé dans le rétroviseur extérieur (6) d'un véhicule.

6. Dispositif d'enregistrement selon la revendication 5, **caractérisé en ce que** le dispositif d'enregistrement est formé en tant qu'équipement de surveillance d'angle mort

7. Dispositif d'enregistrement selon la revendication 1, **caractérisé en ce que** le dispositif d'enregistrement est installé dans le rétroviseur intérieur d'un véhicule.

8. Procédé pour enregistrer des données d'image et de véhicule à l'aide d'un capteur optique d'imagerie (9) et d'un processeur de signal pour le traitement des données d'image, et d'une commande de communication (18) pour une communication bidirectionnelle avec le véhicule, d'où sont originaires les données d'image et de véhicule, comportant les étapes consistant à :
- capturer l'image à l'aide du capteur optique
- exploiter l'image à l'aide du processeur de signal
- recevoir des données consécutives concernant le véhicule
- mélanger les données d'image capturées à l'aide du capteur optique et/ou exploitées par le processeur de signal, et les données concernant le véhicule, dans un flux de données, dans une trame de données adaptée au bus de véhicule, et
- sauvegarder la trame de données adaptée dans une mémoire (22).

9. Procédé selon la revendication 8, dans lequel les trames de données d'une image sont mémorisées selon une séquence d'au moins une image par seconde.

10. Dispositif d'enregistrement selon la revendication 8 ou 9, dans lequel les données d'une image sont réduites par exploitation des données d'image, et les données réduites de l'image sont sauvegardées.
